# EUROPÄISCHE PATENTSCHRIFT

(11) **EP 1 663 713 B1**
(45) Veröffentlichungstag und Bekanntmachung des Hinweises auf die Patenterteilung: **28.02.2007**
(21) Anmeldenummer: 04764187.3
(22) Anmeldetag: 17.08.2004
(51) Int. Cl.: B60R 1/00, B60R 11/04, B60Q 1/48, H04N 7/18

(54) **VORRICHTUNG ZUR AUSSENÜBERWACHUNG EINES KRAFTFAHRZEUGS**
DEVICE FOR MONITORING THE EXTERIOR OF A MOTOR VEHICLE
DISPOSITIF DE CONTROLE EXTERIEUR D'UNE AUTOMOBILE

(30) Priorität: 17.09.2003 DE 10342971
(43) Veröffentlichungstag der Anmeldung: 07.06.2006
(73) Patentinhaber: DaimlerChrysler AG, 70567 Stuttgart (DE)
(72) Erfinder: GLOGER, Joachim, 89346 Bibertal (DE)
(86) Internationale Anmeldenummer: PCT/EP2004/009195
(87) Internationale Veröffentlichungsnummer: WO 2005/035313

(56) Entgegenhaltungen:
- DE-A- 10 251 661
- DE-U- 20 214 892
- US-A1- 2002 113 415

## Beschreibung

Die Erfindung betrifft eine Vorrichtung zur Außenüberwachung eines Kraftfahrzeugs nach der im Oberbegriff von Anspruch 1 näher definierten Art.

Eine gattungsgemäße Vorrichtung ist beispielsweise aus der DE 202 14 892 U1 bekannt. Hierbei ist an einem Karosserieteil, des Kraftfahrzeugs, in diesem Fall an einer Stoßstange, eine Trägereinheit angebracht, welche mit zwei Kameras versehen ist, um Bereiche beiderseits des Kraftfahrzeugs überwachen zu können. Zwar ist hierdurch eine Möglichkeit zur Integration einer Kamera in ein Kraftfahrzeug gegeben, nachteilig ist dabei jedoch die verhältnismäßig aufwändige Konstruktion sowie die ungenügende bzw. nicht vorhandene Rundumsicht.

Das prinzipielle Problem bei der Unterbringung von Kameras an oder in Kraftfahrzeugen ist stets deren Größe, da diese nur mit nicht vertretbarem Aufwand verringert werden kann, sodass sich sowohl bezüglich des Designs als auch bezüglich der Konstruktion teilweise erhebliche Schwierigkeiten ergeben.

Es ist daher Aufgabe der vorliegenden Erfindung, eine Vorrichtung zur Außenüberwachung eines Kraftfahrzeugs mit wenigstens einer Kamera zu schaffen, welche mit geringem Aufwand in das Kraftfahrzeug integriert ist, keine allzu große Störung des Kraftfahrzeugs darstellt und dennoch eine gute Rundumsicht bietet.

Erfindungsgemäß wird diese Aufgabe durch die in Anspruch 1 genannten Merkmale gelöst.

Durch die erfindungsgemäße Unterbringung der Kamera im Bereich einer Drehachse eines Heckscheibenwischers des Kraftfahrzeugs ergibt sich eine Lösung, die gleichermaßen konstruktiv einfach und designtechnisch wenig störend ist. Ein sehr großer Vorteil der erfindungsgemäßen Lösung ist darüber hinaus dadurch gegeben, dass sich die Kamera an einem sehr vorteilhaften Ort befindet, an dem eine sehr gute Übersicht nach hinten gegeben ist und ein Fahrer des Kraftfahrzeugs auf diese Weise zum Beispiel beim Einparken erhebliche Vorteile gegenüber dem üblichen Blick in den Rückspiegel hat.

Ein Heckscheibenwischer für ein Kraftfahrzeug mit einer erfindungsgemäßen Vorrichtung ergibt sich aus Anspruch 8.

In Anspruch 9 ist ein Kraftfahrzeug mit einem derartigen Heckscheibenwischer angegeben.

Nachfolgend sind Ausführungsbeispiele der Erfindung prinzipmäßig dargestellt.

Dabei zeigen:
- Fig. 1: ein Kraftfahrzeug mit einem Heckscheibenwischer und einer daran angebrachten erfindungsgemäßen Vorrichtung; und
- Fig. 2: die erfindungsgemäße Vorrichtung im Schnitt nach der Linie II-II aus Fig. 1.

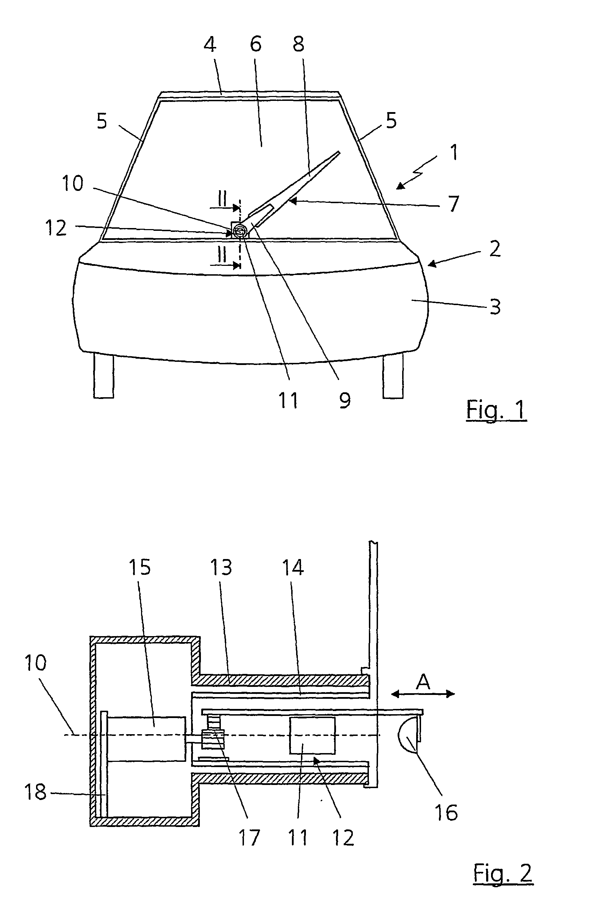

In Fig. 1 ist in einer Ansicht von hinten ein Kraftfahrzeug 1 dargestellt, welches eine Karosserie 2 mit einem Kofferraum 3, einem Dach 4 und zwei das Dach 4 mit dem Kofferraum 3 verbindenden C-Säulen 5 aufweist.

In an sich bekannter Weise ist in dem Bereich zwischen dem Kofferraum 3, dem Dach 4 und den C-Säulen 5 eine Heckscheibe 6 angeordnet, an welcher ein Heckscheibenwischer 7 zum Wischen derselben angebracht ist. Der Heckscheibenwischer 7, der alternativ auch an dem Kofferraum 3 oder an der Oberseite der Heckscheibe 6 und gegebenenfalls an dem Dach 4 angebracht sein könnte, weist in an sich bekannter Weise ein Wischerblatt 8 auf, welches an einem Wischerarm 9 angebracht ist, der wiederum um eine Drehachse 10 drehbar ist.

Im Bereich der Drehachse 10 ist eine Kamera 11 angeordnet, welche Teil einer Vorrichtung 12 zur Außenüberwachung des Kraftfahrzeugs 1 ist und in Fig. 2 detaillierter dargestellt wird.

Innerhalb eines Gehäuseteils 13 des Wischerarms 9 befindet sich ein Rohr 14, in dem die Kamera 11 angeordnet ist. Das Gehäuseteil 13 befindet sich somit außerhalb des Rohrs 14. Im vorliegenden Fall ist innerhalb des Gehäuseteils 13 ein Antriebsmotor 15 angeordnet, der in der Lage ist, einen mit der Kamera 11 verbundenen Spiegel 16 gegenüber dem Rohr 14 zu bewegen und denselben somit gemäß dem mit "A" bezeichneten Pfeil aus dem Wischerarm 9 auszufahren, wobei die Kamera 11 geschützt in dem Rohr 14 verbleibt. Um eventuellen Schwierigkeiten bei der Änderung des Abstands zwischen der Kamera 11 und dem Spiegel 16 entgegenzutreten, können auch sowohl die Kamera 11 als auch der Spiegel 16 als miteinander verbundene Einheit bewegt werden.

Vorzugsweise ist vorgesehen, dass der Antriebsmotor 15 auch zur Bewegung des Heckscheibenwischers 7 dient. Zum Antrieb des Spiegels 16 ist der Antriebsmotor 15 über ein erstes Getriebe 17 mit demselben verbunden. Zur Bewegung des Heckscheibenwischers 7 ist der Antriebsmotor 15 mit demselben über ein zweites Getriebe 18 verbunden. Die Kamera 11 ist im vorliegenden Fall als Panoramakamera mit einem Sichtbereich von 360° bzw. als sogenannte Omnicam ausgeführt.

In nicht dargestellter Weise kann eine für die Kamera 11 notwendige Stromversorgung durch den Heckscheibenwischer 7 verlaufen, wobei bereits bestehende Kabelwege verwendet werden können. Gegenüber einem üblichen Heckscheibenwischer ist der Heckscheibenwischer 7 lediglich geringfügig modifiziert, beispielsweise weist er im Bereich der Drehachse 10 einen etwas größeren Durchmesser zur Unterbringung der Vorrichtung 12 mit der Kamera 11 und dem Spiegel 16 auf.

## Patentansprüche

1. Vorrichtung zur Außenüberwachung eines Kraftfahrzeugs mit wenigstens einer Kamera,
**dadurch gekennzeichnet,**
**dass** die Kamera (11) im Bereich einer Drehachse (10) eines Heckscheibenwischers (7) des Kraftfahrzeugs (1) angeordnet ist.

2. Vorrichtung nach Anspruch 1,
**dadurch gekennzeichnet,**
**dass** innerhalb eines Gehäuseteils (13) des Heckscheibenwischers (7) ein Rohr (14) angeordnet ist, in welchem die Kamera (11) angeordnet ist.

3. Vorrichtung nach Anspruch 2,
**dadurch gekennzeichnet,**
**dass** die Kamera (11) starr innerhalb des Rohrs (14) gehalten ist.

4. Vorrichtung nach Anspruch 2 oder 3,
**dadurch gekennzeichnet,**
**dass** die Kamera (11) mit einem Spiegel (16) verbunden ist, welcher gegenüber dem Rohr (14) verfahrbar ist.

5. Vorrichtung nach Anspruch 4,
**dadurch gekennzeichnet,**
**dass** der Spiegel (16) mittels eines den Heckscheibenwischer (7) antreibenden Antriebsmotors (15) verfahrbar ist.

6. Vorrichtung nach Anspruch 2,
**dadurch gekennzeichnet,**
**dass** die Kamera (11) mit einem Spiegel (16) verbunden und mit demselben gegenüber dem Rohr (14) verfahrbar ist.

7. Vorrichtung nach einem der Ansprüche 1 bis 6,
**dadurch gekennzeichnet,**
**dass** die Kamera (11) als Panoramakamera mit einem Sichtbereich von 360° ausgeführt ist.

8. Heckscheibenwischer für ein Kraftfahrzeug mit einer Vorrichtung nach einem der Ansprüche 1 bis 7.

9. Kraftfahrzeug mit einem Heckscheibenwischer nach Anspruch 8.

## Claims

1. Device for the external monitoring of a motor vehicle, comprising at least one camera, **characterized in that** the camera (11) is disposed in the region of a pivot axis (10) of a rear window wiper (7) of the motor vehicle (1).

2. Device according to Claim 1, **characterized in that** arranged within a housing part (13) of the rear window wiper (7) there is a tube (14), in which the camera (11) is disposed.

3. Device according to Claim 2, **characterized in that** the camera (11) is held rigidly within the tube (14).

4. Device according to Claim 2 or 3, **characterized in that** the camera (11) is connected to a mirror (16) which can be shifted relative to the tube (14).

5. Device according to Claim 4, **characterized in that** the mirror (16) can be shifted by means of a drive motor (15) driving the rear window wiper (7).

6. Device according to Claim 2, **characterized in that** the camera (11) is connected to a mirror (16) and can be shifted with the same relative to the tube (14).

7. Device according to one of Claims 1 to 6, **characterized in that** the camera (11) is realized as a panorama camera with a 360° range of vision.

8. Rear window wiper for a motor vehicle having a device according to one of Claims 1 to 7.

9. Motor vehicle having a rear window wiper according to Claim 8.

## Revendications

1. Dispositif de surveillance extérieure d'un véhicule automobile comprenant au moins une caméra, **caractérisé en ce que** la caméra (11) est disposée dans la zone d'un axe de rotation (10) d'un essuie-glace de lunette arrière (7) du véhicule automobile (1).

2. Dispositif selon la revendication 1, **caractérisé en ce qu'**à l'intérieur d'une partie du boîtier (13) de l'essuie-glace de lunette arrière (7) est disposé un tube (14) dans lequel est disposée la caméra (11).

3. Dispositif selon la revendication 2, **caractérisé en ce que** la caméra (11) est maintenue de manière rigide à l'intérieur du tube (14).

4. Dispositif selon la revendication 2 ou 3, **caractérisé en ce que** la caméra (11) est reliée à un miroir (16) qui est mobile par rapport au tube (14).

5. Dispositif selon la revendication 4, **caractérisé en ce que** le miroir (16) peut être déplacé au moyen d'un moteur d'entraînement (15) qui entraîne l'essuie-glace de lunette arrière (7).

6. Dispositif selon la revendication 2, **caractérisé en ce que** la caméra (11) est reliée avec un miroir (16) et peut être déplacée avec celui-ci par rapport au tube (14).

7. Dispositif selon l'une des revendications 1 à 6, **caractérisé en ce que** la caméra (11) est réalisée sous la forme d'une caméra panoramique avec une plage de vision de 360°.

8. Essuie-glace de lunette arrière pour un véhicule automobile comprenant un dispositif selon l'une des revendications 1 à 7.

9. Véhicule automobile comprenant un essuie-glace de lunette arrière selon la revendication 8.
